# FASCICULE DE BREVET EUROPEEN

(11) **EP 0 811 458 B1**
(45) Date de publication et mention de la délivrance du brevet: **23.01.2002**
(21) Numéro de dépôt: 97401268.4
(22) Date de dépôt: 05.06.1997
(51) Int. Cl.: B23Q 3/154, B23K 26/00

(54) **Dispositif et installation d'accostage de deux pièces en feuilles**
Vorrichtung und Anlage zum Halten von zwei Blechstücken
Device and installation for clamping two sheet pieces

(30) Priorité: 07.06.1996 FR 9607094
(43) Date de publication de la demande: 10.12.1997
(73) Titulaire: Renault Automation Comau, 92365 Meudon La Forêt Cedex (FR)
(72) Inventeur: Thurier, Yvan, 94320 Thiais (FR)
(74) Mandataire: Robert, Jean-Pierre

(56) Documents cités:
- EP-A- 0 258 454
- EP-A- 0 630 851
- CH-A- 204 933
- FR-A- 2 668 084
- GB-A- 2 211 356
- US-A- 4 139 145
- US-A- 4 482 034

## Description

La présente invention concerne un dispositif d'accostage de deux tôles pour réaliser, par exemple, une soudure bord à bord de celles-ci.

Un tel dispositif est divulgué, par example, par US-A-4 139 145.

Le dispositif d'accostage de deux tôles par l'un de leurs bords met en oeuvre au moins deux dispositifs de bridage et comporte un premier bâti fixe présentant une surface supérieure pour recevoir un premier dispositif de bridage, et un second bâti qui présente une surface supérieure de réception d'un second dispositif de bridage, le second bâti étant articulé au premier autour d'un axe parallèle à leur surface supérieure et attelé au premier bâti par un organe élastique dont l'effet tend à rappeler le second bâti dans une position où il est en appui contre une butée du premier bâti. Cette butée est de préférence formée par une surface de came portée par le premier bâti qui est effaçable de sorte que lorsqu'on a mis en place sur les deux bâtis les tôles à réunir bord à bord par exemple par soudage laser, l'effort qui tend à rapprocher les deux bâtis l'un de l'autre lorsque l'on efface la surface de came, est converti en un effort qui presse les tôles l'une contre l'autre le long de leur bord en contact.

En outre, le dispositif d'accostage de l'invention se présente avantageusement sous forme d'un module de sorte qu'il est aisé de constituer une installation d'accostage mettant en oeuvre plusieurs modules côte à côte dont les moyens de commande en ce qui concerne le dispositif de bridage qu'elle met en oeuvre et la pression d'accostage qui doit régner lors du soudage sont communs à tous les modules.

Un dispositif de bridage adapté à l'invention comprend un arrangement régulier d'aimants permanents situés sous une table, dont les faces polaires sont perpendiculaires au plan de la table et un circuit magnétique pour chacun des aimants comportant une culasse en matériau ferromagnétique rapporté de manière amovible sur une pièce reposant sur la table et des éléments ferromagnétiques de fermeture du circuit magnétique, les aimants et les éléments étant mobiles les uns par rapport aux autres, chaque aimant étant monté dans un support tournant autour d'un axe parallèle aux faces polaires, à l'intérieur d'un corps dans lequel alternent des plaques ferromagnétiques et des plaques amagnétiques, dont la surface supérieure est perpendiculaire à ces axes de rotation et forme la table de bridage. Dans la première position des aimants, les faces polaires sont parallèles entre elles et les aimants sont dans l'épaisseur d'une plaque non ferromagnétique et en regard l'un de l'autre par une face de même polarité tandis que dans la seconde position les aimants sont transversaux par rapport aux plaques non ferromagnétiques et en regard l'un de l'autre par des faces de polarité opposées. Ainsi, dans la première position, le circuit magnétique de chaque aimant est refermé en direction de la culasse alors que dans la seconde position, le circuit magnétique de chaque aimant est refermé en direction de l'élément adjacent du fait de l'alternance des faces polaires en regard l'une de l'autre et de la position relative des aimants par rapport aux plaques non ferromagnétiques.

Enfin, chaque support d'aimant est calé en rotation sur un pignon d'entraînement de sorte que chacun des pignons peut être accouplé à un dispositif d'entraînement pour manoeuvrer en synchronisme la rotation de tous les support d'un arrangement d'aimants.

D'autres caractéristiques et avantages de l'invention ressortiront de la description donnée ci-après à titre d'exemple d'un module formant dispositif d'accostage avec dispositif de bridage adapté.

Il sera fait référence aux dessins annexés parmi lesquels :
- la figure 1 est une vue en coupe et en élévation d'un dispositif d'accostage conforme à l'invention,
- la figure 2 est une vue de dessus de ce dispositif d'accostage,
- la figure 3 est une vue en coupe d'un dispositif de bridage adapté au dispositif d'accostage selon l'invention,
- la figure 4 est une vue de dessous de la figure 3,
- la figure 5 est une vue en coupe selon la ligne III-III de la figure 3,
- la figure 6 est une vue en coupe selon la ligne IV-IV de la figure 3,
- la figure 7 est une vue en coupe semblable à celle de la figure 5, les supports d'aimant ayant subi un pivotement de 90° par rapport à leur orientation en figure 5.

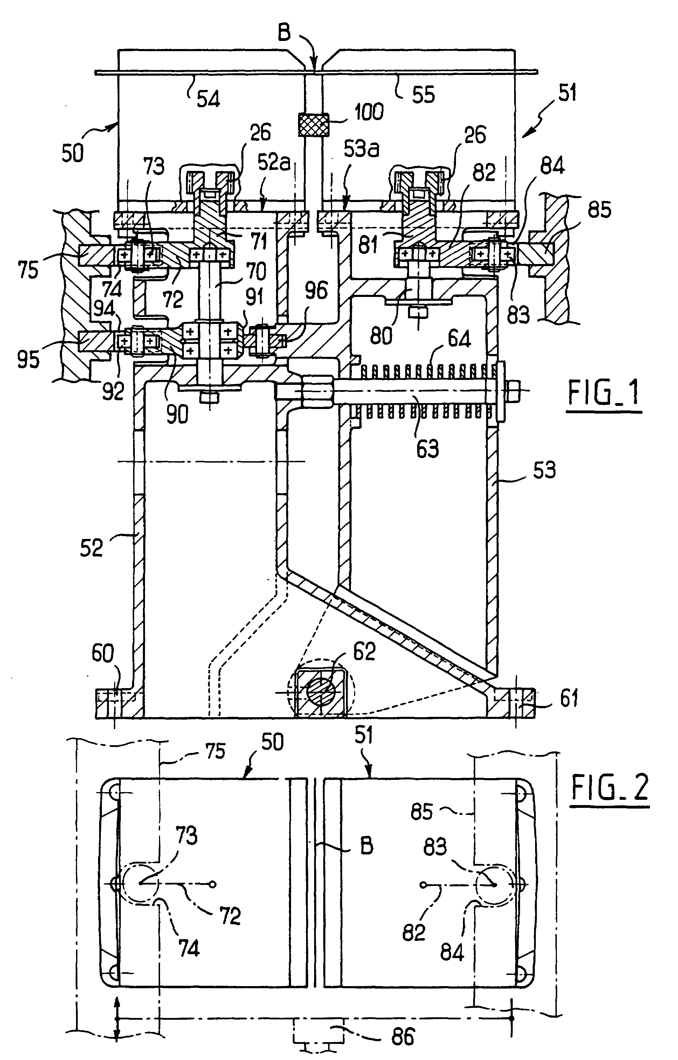

Aux figures 1 et 2 deux blocs de bridage sont référencés 50 et 51. Chacun de ces blocs est fixé à la surface supérieure 52a pour le corps 50 d'un bâti 52 et 53a pour le corps 51 d'un bâti 53. L'ensemble constitue un dispositif d'accostage de deux tôles 54, 55 qui sont bridées sur les corps 50 et 51.

Le bâti 52 est un bâti fixe possédant des moyens inférieurs 60, 61 pour sa fixation à une structure non représentée, ce bâti portant un axe d'articulation 62 parallèle aux surfaces supérieures 52a et 53a donc parallèle aux tables de bridage autour duquel la partie inférieure du bâti 53 peut pivoter. Le mouvement possible du bâti 53 par rapport au bâti 52 se résume à l'écartement ou le rapprochement des blocs 50 et 51 d'ailleurs de très faible amplitude. Le bâti 53 est attelé élastiquement au bâti 52 au moyen d'un tirant 63 implanté sur le bâti 52 et un ressort 64 comprimé entre la tête 63a du tirant 63 et une surface correspondante du bâti 53 de manière que l'effort développé par le ressort 64 tende à rapprocher les blocs 50 et 51 l'un de l'autre.

Le bâti 52 est équipé d'un arbre 70 qui porte à son extrémité supérieure un pivot 71 accouplé à un pignon 26. Ce pivot 71 porte un bras 72 perpendiculaire à l'axe du pivot 70 donc à l'axe du pignon 26, ce bras 72 pivotant donc dans un plan sensiblement parallèle au plan de bridage de la tôle 54. L'extrémité du bras 72 est équipée d'un galet 73 qui est maintenu en permanence à l'intérieur de l'encoche 74 d'un coulisseau 75 susceptible d'être animé d'un mouvement rectiligne dans le plan de pivotement du bras 72, la profondeur de l'encoche 74 étant suffisante pour que l'extrémité 73 du bras 72 y reste engagée pour une amplitude de pivotement du bras 72 d'au moins 90°. Le coulisseau 75 est guidé dans une coulisse non représentée, par exemple solidaire du bâti 52.

De la même manière, le bâti 53 porte un axe 80 surmonté d'un pivot 81 qui est calé en rotation avec le pignon 26 du bloc 51, ce pivot 81 comportant un bras 82 dont l'extrémité est pourvue d'un galet 83, le galet 83 coopérant avec un coulisseau 85 possédant une encoche 84 dont la profondeur autorise la transformation du mouvement linéaire du coulisseau 85 en une rotation d'amplitude au moins égale à 90° du bras 82 autour de l'axe 80. Le coulisseau est également monté glissant dans une coulisse fixe malgré le fait que le bâti 53 soit "pivotant" autour de l'axe 62. En effet ce pivotement est tellement faible qu'il est de l'ordre des jeux entre l'encoche 84 et le galet 83. Les coulisseaux 75 et 85 sont de préférence reliés à un même actionneur 86 de manière à assurer le parfait synchronisme du pivotement du pignon 26 dans chacun des blocs 50 et 51. Il peut bien entendu en être différemment si on souhaite brider les plaques 54, 55 indépendamment l'une de l'autre.

L'axe 70 du bâti 52 porte également à rotation un levier 90 dont une extrémité tournée vers le bâti 53 est conformée en une surface de came 91 tandis que son autre extrémité est pourvue d'un galet 92 coopérant avec l'encoche 94 d'un coulisseau 95 comme les leviers 72 et 82 ci-dessus décrits. La surface de came 91 est telle qu'une rotation du bras 90 provoque un léger mouvement du bâti 53 autour de l'axe 62, le ressort 64 ayant pour effet de constamment plaquer un galet 96 porté par le bâti 53 contre la surface de came 91. Ce contact est permanent en l'absence de tôles 54 et 55 bridées sur les blocs 50 et 51 comme cela sera expliqué ci-après.

Enfin, le dispositif d'accostage selon l'invention comporte entre les deux blocs 50 et 51 une pièce 100 constituant un écran de protection des bâtis 52 et 53 à l'encontre d'un rayon laser destiné à souder les tôles 54 et 55 bord à bord.

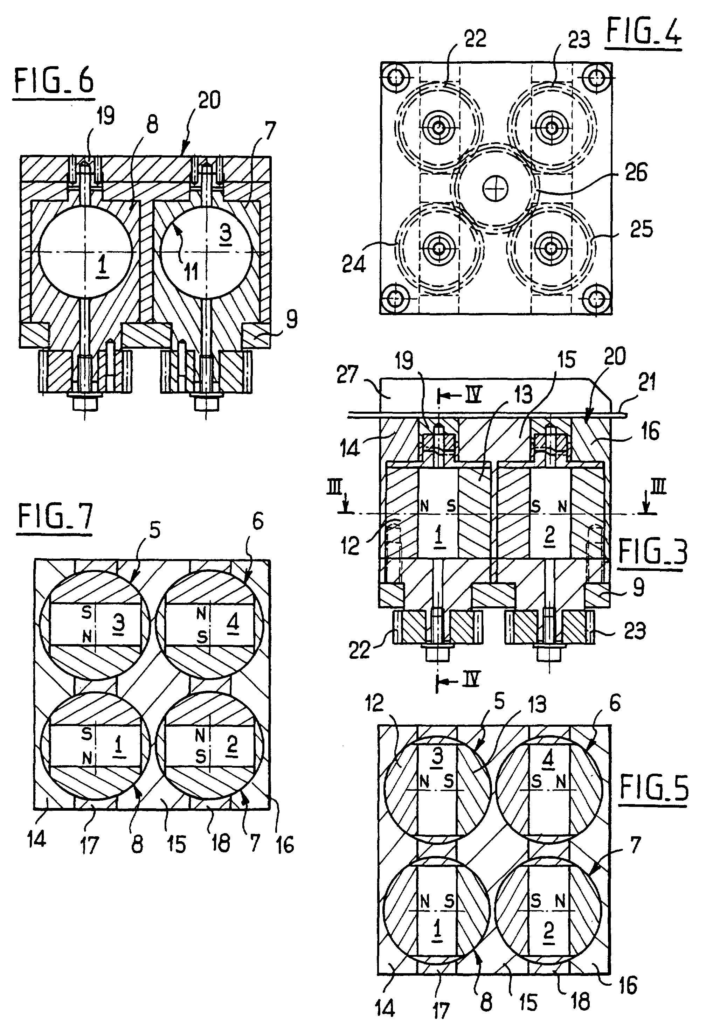

Aux figures 3 à 7, un dispositif de bridage adapté à l'invention comporte un bloc de quatre aimants permanents 1, 2, 3, 4 se présentant sous la forme de pastilles disposées verticalement dans des supports cylindriques 5, 6, 7 et 8, lesquels supports sont montés tournants par leur extrémité inférieure dans une plaque de base 9.

Chaque support est ici réalisé sous la forme d'un corps cylindrique en laiton percé par un logement cylindrique 11 perpendiculaire à son axe. Dans ce logement cylindrique 11 est logée une pastille d'aimant permanent et ce logement est refermé de chaque côté de cette pastille par deux bouchons 12 et 13 qui reconstituent le cylindre. Ces bouchons 12 et 13 sont en matériau ferromagnétique par exemple en fer doux.

Le corps dans lequel sont logés les différents cylindres 5, 6, 7 et 8, au-dessus de la plaque 9, est constitué par l'empilage de trois plaques en fer doux ou en matériau ferromagnétique 14, 15, 16 entre lesquelles sont intercalées deux plaques de matériau amagnétique par exemple en laiton 17 et 18. Les plaques 17 et 18 sont d'une épaisseur sensiblement égale à l'épaisseur des disques magnétiques 1 à 4 et comportent des logements dans leur partie supérieure opposée à la plaque 9 pour former palier de rotation d'un tourillon supérieur que comportent des cylindres 5 à 8 (par exemple le tourillon 19 du cylindre 8 visible aux figures 3 et 6). La surface supérieure des plaques 14 à 18 forme la table 20 sur laquelle on souhaite fixer un matériau en feuille 21 (figure 3) par exemple une tôle métallique.

Au-delà de la plaque inférieure 9, chaque support cylindrique 5 à 8 comporte un pignon 22, 23, 24, 25 attelé en rotation au support correspondant, tous ces pignons étant capables d'engrener avec un pignon de manoeuvre central 26 visible sur la figure 4 uniquement. Les pignons 22 à 26 étant identiques, on comprend qu'une rotation d'un quart de tour du pignon 26 par exemple dans le sens des aiguilles d'une montre, entraîne la rotation simultanée de même amplitude et de sens contraire des pignons 22 à 25 donc des supports cylindriques 5 à 8. Si l'amplitude de rotation est de 90°, les aimants passent de leur orientation de la figure 6, c'est-à-dire celle où ils sont dans l'épaisseur des plaques 17 et 18 en laiton à leur orientation de la figure 7 où ils sont perpendiculaires à ces plaques. On notera enfin à la figure 3 la présence d'une culasse 27 disposée au-dessus de l'objet 21, cette culasse 27 étant complètement séparée du corps dont la surface supérieure forme la table 20 et étant en matériau ferromagnétique pour les raisons données ci-après.

Dans leur orientation illustrée par les figures 3, 4 et 5, le bloc est actif pour brider l'objet 21 et, dans cette position, deux aimants adjacents présentent l'un en regard de l'autre des faces de même polarité. Les bouchons 12 et 13 de chacun des supports tournants 5 et 8 forment avec les plaques ferromagnétiques 14, 15 et 16, des éléments du circuit magnétique orientant ce circuit en direction de la culasse 27 où il se referme. Le circuit magnétique ainsi fermé engendre une force d'attraction importante de la culasse 27 contre la table 20, cette force d'attraction étant la force de bridage de l'objet plat 21 que celui-ci soit magnétique ou amagnétique. Dans leur orientation de la figure 7, les aimants 1 à 4 présentent en regard les uns des autres (par paires) des faces de polarité opposée. On comprend ainsi que le circuit magnétique se referme par l'intermédiaire des bouchons 12 et 13 et des plaques 14, 15 et 16 sur les aimants eux-mêmes, si bien que la culasse 27 n'appartient plus principalement (aux fuites près) au circuit magnétique défini par l'arrangement d'aimants dans leur position de la figure 7 et cette culasse peut donc être aisément retirée pour libérer l'objet 21.

L'exemple donné aux 3 à 7 comporte quatre aimants. Bien entendu, on peut constituer une table de surface plus importante avec par exemple neuf aimants dans des supports montés tournants aux noeuds d'un maillage carré, quatre pignons intermédiaires accouplant entre eux les pignons calés sur les supports tournants. L'un de ces quatre pignons intermédiaires tel que celui 26 de la figure 4 sera moteur et provoquera par sa rotation une rotation synchronisée de même amplitude et de même sens de tous les aimants mis en oeuvre dans une telle unité.

Le fonctionnement du dispositif décrit en regard de ces figures 1 et 2 est le suivant.

Par les coulisseaux 75 et 85, les aimants de chacun des blocs 50 et 51 sont dans leur position inactive telle que celle de la figure 7. Les culasses 56 et 57 sont retirées et la surface de came 91 repousse au maximum de ce qui est prévu le bâti 53 du bâti 52 à l'encontre de l'effet du ressort 64.

Les tôles 54 et 55 sont placées sur les tables formées par la surface supérieure des blocs 50 et 51 de manière qu'elles soient en butée l'une sur l'autre par leur bord B que l'on place entre les blocs de bridage. On place ensuite les culasses 56 et, 57 et au moyen des coulisseaux 75 et 85, on fait pivoter les aimants de manière à les placer dans l'orientation représentée à la figure 6. Le bridage des tôles sur les blocs 50 et 51 est ainsi assuré. En déplaçant le coulisseau 95, on efface la surface de came 91 qui encaissait l'effort du ressort 64 tendant à rapprocher les blocs 50 et 51. Cet effort est alors encaissé par la tôle 54 par le bord B sur lequel la tôle 55 vient s'appuyer sous l'effet du ressort 64. L'élément 100 est à cet égard suffisamment souple pour n'opposer aucune résistance notable au rapprochement des bâtis 52, 53. En pratique il ne se produit aucun mouvement perceptible du bâti 53 par rapport au bâti 52 autour de l'axe 62.

Le soudage s'opère au moyen d'un rayon laser qui, focalisé sur les deux bords en contact des tôles 54 et 55, provoque la fusion de ces bords, la pression existant à ce niveau du fait du ressort 64 constituant une sorte de forgeage de la soudure ainsi réalisée, de manière connue et souhaitée ce qui est une garantie d'une liaison correcte. Le soudage étant achevé, par le moyen des coulisseaux 75 et 85 on place les aimants dans leur orientation inactive (cf. figure 7), on retire les culasses 56 et 57 et les tôles 54 et 55 soudées. Auparavant on aura, au moyen du coulisseau 95, actionné la surface de came 91 pour rétablir le contact entre le bâti 53 et le bâti 52.

Aux figures 1 et 2, on a représenté un dispositif qui peut constituer un module élémentaire pour un installation d'accostage destinée au raboutage de tôles bord à bord sur une grande longueur. Une telle installation est alors aisément constituée par une pluralité de dispositifs d'accostages tels que celui décrit ci-dessus, ces dispositifs ayant en commun trois coulisseaux 75, 85 et 95 qui constituent les moyens centralisés d'une commande synchronisée du bridage et du débridage ainsi que du transfert des efforts d'appui entre les bâtis 52 et 53 vers les tôles 54 et 55. Il s'agit là d'une solution extrêmement avantageuse car très sûre du fait même de sa nature entièrement mécanique. En outre, elle met en oeuvre un nombre très petit d'actionneurs qui de plus ne dépend pas de la longueur du bord à souder.

## Revendications

1. Dispositif d'accostage de deux tôles (54, 55) par l'un de leurs bords (B), mettant en oeuvre au moins deux dispositifs de bridage, **caractérisé en ce qu'**il comporte un premier bâti fixe (52) présentant une surface supérieure (52a) pour recevoir un premier dispositif de bridage (50), et un second bâti (53) présentant une surface supérieure (53a) sur laquelle est fixé un second dispositif de bridage (51), chaque dispositif de brigade (50, 51) présentant une table (20) sur laquelle on place une des tôles (54, 55), le second bâti (53) étant articulé au premier bâti (52) autour d'un axe (62) parallèle à leur surface supérieure et étant attelé au premier bâti par un organe élastique (64) qui tend à rappeler le second bâti en appui contre une butée (91) du premier bâti (52).

2. Dispositif d'accostage selon la revendication 1, **caractérisé en ce que** la butée (91) est formée par une surface de came portée de manière effaçable par le premier bâti (52).

3. Dispositif d'accostage selon la revendication 2, **caractérisé en ce que** la surface de came (91) est portée par un bras pivotant (90) dans le premier bâti (53) autour d'un axe (70) perpendiculaire à la table de bridage et dont l'extrémité (92) coopère avec l'encoche (94) d'un coulisseau (95) de sa manoeuvre.

4. Dispositif selon l'une des revendications 1 à 3, **caractérisé en ce que** chaque bâti présente un palier d'axe perpendiculaire aux surfaces supérieures (52a, 53a) de support du pivot (70) d'un pignon (26) d'entraînement.

5. Dispositif selon la revendication 4, **caractérisé en ce que** le pignon d'entraînement (26) est accouplé à un bras (72, 82) perpendiculaire à son axe pour coopérer par son extrémité (73) avec un coulisseau (75, 95) à encoches (74, 84) de manoeuvre en pivotement du bras (72, 82), le coulisseau étant mobile parallèlement à lui-même entre deux positions correspondant à deux positions angulaires du bras distantes l'une de l'autre de 90°.

6. Dispositif d'accostage selon la revendication 5, **caractérisé en ce que** le bras (72, 82) du pignon d'entraînement (26) s'étend sous la surface supérieure (52a, 83a) du bâti (52, 53) correspondant, en regard de l'encoche (74, 84) du coulisseau (75, 85) correspondant de manoeuvre.

7. Dispositif d'accostage selon la revendication 3 et la revendication 6, **caractérisé en ce que** le bras pivotant (90) portant la surface de came (91) est dans un plan parallèle au plan de débattement du bras (72) du pignon (26), l'axe de pivotement des deux bras (72, 90) étant confondu, les deux coulisseaux de manoeuvre de ces deux bras étant parallèles.

8. Dispositif d'accostage selon l'une des revendications 1 à 7, **caractérisé en ce qu'**il comporte entre les deux dispositifs de bridage, sous la table, un matériau (100) d'absorption d'un rayon laser.

9. Dispositif selon la revendication 5, **caractérisé en ce que** chaque dispositif de bridage des tôles (54, 55) comprend un arrangement régulier d'aimants permanents (1, 2, 3, 4) sous la table (20), dont les faces polaires sont perpendiculaires au plan de la table et un circuit magnétique pour chacun des aimants comportant une culasse (27) en matériau ferromagnétique rapportée de manière amovible sur la tôle reposant sur la table et des éléments ferromagnétiques (12, 13, 14, 15, 16) de fermeture du circuit magnétique, chaque aimant (1 à 4) étant monté dans un support tournant (5 à 8) autour d'un axe parallèle aux faces polaires des aimants, à l'intérieur d'un corps dans lequel alternent des couches ferromagnétiques et des couches amagnétiques dont la surface supérieure (20) est perpendiculaire à ces axes de rotation et forme la table de bridage, de sorte que, dans leur première position, les faces polaires des aimants sont parallèles entre elles et aux surfaces de séparation des couches du corps susdit, les aimants étant en regard les uns des autres par une face de même polarité tandis que dans leur seconde position, les aimants sont en regard l'un de l'autre par les faces de polarité opposées qui sont parallèles entre elles et perpendiculaires aux surfaces de séparation des couches (14, 15, 16) formant le corps susdit, et **en ce que** chaque support d'aimant (5 à 8) porte un pignon (22 à 25) d'entraînement, chacun des pignons étant accouplé au pignon d'entraînement (26) pour la manoeuvre en rotation synchronisée de tous les supports d'un arrangement d'aimants.

10. Installation d'accostage de deux tôles pour leur liaison par soudage bord à bord, **caractérisée en ce qu'**elle comporte une pluralité de dispositifs d'accostage selon l'une des revendications 3 à 9, disposés'côte à côte de manière que les axes d'articulation des bâtis soient alignés, un premier coulisseau (95) pour la manoeuvre de toutes les cames (91) d'écartement des bâtis (52, 53) et deux coulisseaux (75, 85) pour la manoeuvre de tous les supports d'aimants.

11. Installation selon la revendication 10, **caractérisée en ce que** les deux coulisseaux (75, 85) de manoeuvre en rotation des supports d'aimants sont attelés l'un à l'autre et à un organe moteur unique (86).

## Patentansprüche

1. Vorrichtung zum Aneinanderhalten von zwei Blechstücken (54, 55) entlang eines ihrer Ränder (B) mit Hilfe von zumindest zwei Spannvorrichtungen, **dadurch gekennzeichnet, daß** die Haltevorrichtung ein erstes feststehendes Gestell (52) umfaßt, das eine Oberfläche (52a) hat zum Aufnehmen einer ersten Spannvorrichtung (50), und ein zweites Gestell (53), das eine Oberfläche (53a) hat, auf der eine zweite Spannvorrichtung (51) befestigt ist, wobei jede Spannvorrichtung (50, 51) einen Tisch hat, auf dem eines der Blechstücke (54, 55) angeordnet wird und wobei das zweite Gestell (53) mit dem ersten Gestell (52) um eine zur jeweiligen Oberfläche parallele Achse (62) schwenkbar angelenkt ist und mit dem ersten Gestell über ein elastisches Organ (64) gekoppelt ist, das dazu geeignet ist, das zweite Gestell derart rückzuholen, daß es mit einem Anschlagelement (91) des ersten Gestells (52) in Kontakt kommt.

2. Haltevorrichtung nach Anspruch 1, **dadurch gekennzeichnet, daß** das Anschlagelement (91) von einer Nockenfläche gebildet ist, die derart gehalten wird, daß sie durch das erste Gestell (52) auslenkbar ist.

3. Haltevorrichtung nach Anspruch 2, **dadurch gekennzeichnet, daß** das Anschlagelement (91) von einem Schwenkarm (90) getragen wird, der in dem ersten Gestell (52) schwenkbar um eine senkrecht zu dem Spanntisch verlaufende Achse (70) angeordnet ist, und dessen Ende (92) mit der Aussparung (94) eines ihn steuernden Schiebers (95) zusammenwirkt.

4. Vorrichtung nach einem der Ansprüche 1 bis 3, **dadurch gekennzeichnet, daß** jedes Gestell ein Lager mit einer senkrecht zu den Oberflächen (52a, 53a) verlaufenden Achse hat, welches einen Zapfen (70) eines Antriebsritzels (26) trägt.

5. Vorrichtung nach Anspruch 4, **dadurch gekennzeichnet daß** das Antriebsritzel (26) mit einem senkrecht zu dessen Achse verlaufenden Arm (72, 82) verbunden ist, der über sein Ende (73) mit einem Aussparungen (74, 84) aufweisenden Steuerschieber (75, 95) zum Schwenken des Arms (72, 82) zusammenwirkt, wobei der Steuerschieber parallel zu sich selbst zwischen zwei Stellungen bewegbar ist, die zwei Winkelstellungen des Armes mit einem Abstand von 90° entsprechen.

6. Haltevorrichtung nach Anspruch 5, **dadurch gekennzeichnet, daß** sich der Arm (72, 82) des Antriebsritzels (26) unter der jeweiligen Oberfläche (52a, 83a) des jeweiligen Gestells (52, 53) gegenüber der Aussparung (74, 84) des jeweiligen Steuerschiebers (75, 85) erstreckt.

7. Haltevorrichtung nach Anspruch 3 und Anspruch 6, **dadurch gekennzeichnet, daß** der die Nockenfläche (91) tragende Schwenkarm (90) in einer zur Schwenkbereichebene des Arms (72) des Ritzels (26) parallelen Ebene liegt, wobei die Schwenkachse der beiden Arme (72, 90) übereinstimmt und wobei die beiden Steuerschieber dieser beiden Arme parallel sind.

8. Haltevorrichtung nach einem der Ansprüche 1 bis 7, **dadurch gekennzeichnet, daß** unter dem Tisch, zwischen den beiden Spannvorrichtungen ein Laserstrahl-Absorbtionsmaterial (100) vorgesehen ist.

9. Vorrichtung nach Anspruch 5, **dadurch gekennzeichnet, daß** jede Vorrichtung zum Einspannen der Blechstücke (54, 55) unter dem Tisch (20) eine regelmäßige Anordnung von Permanentmagneten (1, 2, 3, 4), deren Polflächen senkrecht zur Tischebene verlaufen, und einen magnetischen Kreis für jeden der Magneten hat, umfassend ein Joch (27) aus ferromagnetischem Material, das abnehmbar auf dem Blechstück angeordnet ist, das auf dem Tisch aufliegt, und ferromagnetische Elemente (12, 13, 14, 15, 16) zum Schließen des magnetischen Kreises, wobei jeder Magnet (1 bis 4) in einem Träger (5 bis 8), welcher sich um eine zu den Polflächen der Magneten parallele Achse dreht, angeordnet ist im Inneren eines Körpers, in dem ferromagnetische und amagnetische Schichten alternieren, deren Oberfläche (20) sich senkrecht zu den Drehachsen erstreckt und den Spanntisch bildet, derart daß die Polflächen der Magneten in ihrer ersten Stellung zueinander und zu den Trennflächen der Schichten des Körpers parallel sind und die Magneten sich mit einer gleich polarisierten Fläche gegenüberliegen, während die Magneten sich in ihrer zweiten Stellung mit den entgegengesetzt polarisierten Flächen gegenüberliegen, die zueinander parallel sind und sich senkrecht zu den Trennflächen der den Körper bildenden Schichten (14, 15, 16) erstrecken, und **dadurch gekennzeichnet, daß** jeder Magnetträger (5 bis 8) ein Antriebsritzel (22 bis 25) trägt, wobei jedes Ritzel mit dem Antriebsritzel (26) gekoppelt ist, um eine synchrone Drehbewegung aller Träger einer Magnetanordnung zu erzeugen.

10. Anlage zum Aneinanderhalten von zwei Blechstücken, um diese durch Verschweißen ihrer Ränder zu verbinden, **dadurch gekennzeichnet, daß** die Anlage mehrere Haltevorrichtung nach einem der Ansprüche 3 bis 9 umfaßt, die derart nebeneinander angeordnet sind, daß die Gelenkachsen der Gestelle miteinander fluchten, einen ersten Schieber (95) zum Steuern aller Auslenknocken (91) der Gestelle (52, 53) und zwei Schieber (75, 85) zum Steuern aller Magnetträger.

11. Anlage nach Anspruch 10, **dadurch gekennzeichnet, daß** die beiden Steuerschieber (75, 85) zum Drehen der Magnetträger miteinander sowie mit einem einzigen Motororgan (86) gekoppelt sind.

## Claims

1. A device for docking two metal sheets (54, 55) via a respective edge (B) of each of them, the docking device implementing at least two clamping devices, the docking device being **characterized in that** it comprises a fixed first frame (52) presenting a top surface (52a) for receiving a first clamping device (50), and a second frame (53) presenting a top surface (53a) on which a second clamping device (51) is fixed, each clamping device (50, 51) presenting a work surface (20) on which one of the metal sheets (54, 55) is placed, the second frame (53) being hinged to the first frame (52) about an axis (62) parallel to their top surfaces, and being coupled to the first frame via a resilient member (64) urging the second frame to bear against an abutment (91) of the first frame (52).

2. A docking device according to claim 1, **characterized in that** the abutment (91) is formed by a cam surface carried retractably by the first frame (52).

3. A docking device according to claim 2, **characterized in that** the cam surface (91) is carried by a pivot arm (90) pivoting in the first frame (53) about an axis (70) perpendicular to the clamping work surface and having an end (92) which co-operates with the notch (94) of a slider (95) for driving it.

4. A device according to any one of claims 1 to 3, **characterized in that** each frame has a bearing on an axis perpendicular to the top surfaces (52a, 53a) for supporting the pivot (70) of a drive gear (26).

5. A device according to claim 4, **characterized in that** the drive gear (26) is coupled to an arm (72, 82) perpendicular to its axis to co-operate via its end (73) with a slider (75, 95) having notches (74, 84) for driving the arm (72, 82) in pivoting, the slider being movable parallel to itself between two positions corresponding to two angular positions of the arm that are spaced apart by 90° from each other.

6. A docking device according to claim 5, **characterized in that** the arm (72, 82) of the drive gear (26) extends beneath the top surface (52a, 53a) of the corresponding frame (52, 53), facing the notch (74, 84) of the corresponding drive slider (75, 85).

7. A docking device according to claim 3 and claim 6, **characterized in that** the pivot arm (90) carrying the cam surface (91) lies in a plane parallel to the plane in which the arm (72) of the gear (26) moves, the two arms (72, 90) sharing a common pivot axis, the two sliders for driving these two arms being parallel.

8. A docking device according to any one of claims 1 to 7, **characterized in that** it includes laser beam absorbing material (100) beneath the work surface, between the two clamping devices.

9. A device according to claim 5, **characterized in that** each device for clamping metal sheets (54, 55) comprises a regular array of permanent magnets (1, 2, 3, 4) beneath the work surface (20), the pole faces of the magnets being perpendicular to the plane of the work surface, and a magnetic circuit for each of the magnets comprising both a yoke (27) of ferromagnetic material removably placed on the metal sheet resting on the work surface, and ferromagnetic elements (12, 13, 14, 15, 16) for closing the magnetic circuit, each magnet (1 to 4) being mounted in a support (5 to 8) capable of turning about an axis parallel to the pole faces of the magnet inside a body in which ferromagnetic layers alternate with non-magnetic layers with the top surface (20) being perpendicular to said axes of rotation and forming the clamping work surface in such a manner that when the pole faces of the magnets in their first position are parallel to one another and to the separation surfaces between the above-mentioned layers of the body, the magnets face one another via same-polarity faces, whereas in their second position the magnets face one another via opposite-polarity faces which are parallel to one another and perpendicular to the separation surfaces between the layers (14, 15, 16) forming the above-mentioned body, and **in that** each magnet support (5 to 8) carries a drive gear (22 to 25), each gear being coupled to the drive gear (26) for synchronously rotating all of the supports in an array of magnets.

10. An installation for docking two metal sheets to enable them to be welded together edge to edge, the installation being **characterized in that** it comprises a plurality of docking devices according to any one of claims 3 to 9, placed side by side in such a manner that the hinge axes of the frames are in alignment, a first slider (95) for driving all of the cams (91) for moving the frames (52, 53) apart, and two sliders (75, 85) for driving all of the magnet supports.

11. An installation according to claim 10, **characterized in that** the two sliders (75, 85) for driving rotation of the magnet supports are coupled to each other and to a single motor unit (86).
